(19) Europäisches Patentamt
European Patent Office
Office européen des brevets

(11) EP 4 242 266 A1

(12) # EUROPEAN PATENT APPLICATION
published in accordance with Art. 153(4) EPC

(43) Date of publication:
**13.09.2023 Bulletin 2023/37**

(21) Application number: **22749927.4**

(22) Date of filing: **26.01.2022**

(51) International Patent Classification (IPC):
***C08L 75/04** (2006.01)* ***C08G 18/72** (2006.01)*
***C09D 175/04** (2006.01)*

(52) Cooperative Patent Classification (CPC):
**C08G 18/72; C08L 75/04; C09D 175/04**

(86) International application number:
**PCT/KR2022/001342**

(87) International publication number:
**WO 2022/169175 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021 KR 20210017008**
**11.01.2022 KR 20220003898**

(71) Applicant: **LG CHEM, LTD.**
**Yeongdeungpo-gu,**
**Seoul 07336 (KR)**

(72) Inventors:
- **LEE, Sol Yi**
  **Daejeon 34122 (KR)**
- **JUNG, Je Sik**
  **Daejeon 34122 (KR)**
- **PARK, Hyoung Sook**
  **Daejeon 34122 (KR)**
- **WON, Jin Hyeok**
  **Daejeon 34122 (KR)**
- **KIM, Hye Jin**
  **Daejeon 34122 (KR)**
- **HONG, Sung Bum**
  **Daejeon 34122 (KR)**
- **CHOI, Jong Hun**
  **Daejeon 34122 (KR)**
- **SEO, Sang Hyuk**
  **Daejeon 34122 (KR)**
- **JUNG, Jae Min**
  **Daejeon 34122 (KR)**

(74) Representative: **Hoffmann Eitle**
**Patent- und Rechtsanwälte PartmbB**
**Arabellastraße 30**
**81925 München (DE)**

(54) **CURABLE COMPOSITION**

(57) The present application can provide a curable composition capable of securing processability due to excellent blending properties with a filler while having little viscosity change with time and for forming a cured product having excellent electrical insulation performance, and can provide a device comprising, between an exothermic element and a cooling region, a cured product of a tow-component curable composition including the curable composition in thermal contact with both.

EP 4 242 266 A1

## Description

[Technical Field]

Cross-Citation with Related Applications

This application claims the benefit of priority based on Korean Patent Application No. 10-2021-0017008 dated February 5, 2021 and Korean Patent Application No. 10-2022-0003898 dated January 11, 2022, the disclosures of which are incorporated herein by reference in their entirety.

Technical Field

The present application relates to curable compositions and a use thereof.

[Background Art]

As the treatment of heat generated from electric products, electronic products or batteries such as secondary batteries, becomes an important issue, various heat dissipation countermeasures have been proposed. Among the thermally conductive materials used for heat dissipation countermeasures, curable compositions in which thermally conductive fillers are blended with resin components are known. In Patent Document 1, a battery module to which a cured product of such a curable composition is applied is known.

The curable composition may be required to have a low viscosity change over time to ensure processability, and the cured product of the curable composition may be required to have electrical insulation performance for safety, and element protection of electrical products, electronic products or batteries such as secondary batteries.

In order for the cured product of the curable composition to have excellent electrical insulation performance, a volume resistance should be increased. In order to increase the volume resistance, it is advantageous that the cured product has a high crosslinking density, and in order to increase the crosslinking density, it is preferable to use a resin component having high reactivity due to many functional groups.

However, when the used amount of the resin component having high reactivity is increased, the blending properties with the filler are deteriorated, and there is a problem that the viscosity change with time is increased.

Accordingly, there has been a demand for a curable composition that allows the cured product to have blending properties with the filler, and excellent electrical insulation performance while having little viscosity change with time.

[Prior Art Documents]

[Patent Documents]

(Patent Document 1) Korean Laid-open Patent Publication No. 10-2016-0105354

[Disclosure]

[Technical Problem]

The present application is intended to provide a curable composition capable of solving the above problems.

The present application is intended to provide a curable composition capable of securing processability due to excellent blending properties with a filler while having little viscosity change with time.

The present application is intended to provide a curable composition for forming a cured product having excellent electrical insulation performance.

The present application is intended to provide a device comprising, between an exothermic element and a cooling region, a cured product of a curable composition in thermal contact with both.

[Technical Solution]

The term room temperature as used in the present application is a natural temperature without particularly heating and cooling, which may mean any one temperature in a range of about 10°C to 30°C, for example, a temperature of about 15°C or more, about 18°C or more, about 20°C or more, or about 23°C or more, or of about 27 °C or less.

The term alkyl group or alkylene group as used in the present application may be a linear or branched acyclic alkyl group or alkylene group with 1 to 20 carbon atoms, or 1 to 16 carbon atoms, or 1 to 12 carbon atoms, or 1 to 8

carbon atoms, or 1 to 6 carbon atoms, or may be a cyclic alkyl group or alkylene group with 3 to 20 carbon atoms, or 3 to 16 carbon atoms, or 3 to 12 carbon atoms, or 3 to 8 carbon atoms, or 3 to 6 carbon atoms, unless otherwise described. Here, the cyclic alkyl group or alkylene group also includes an alkyl group or alkylene group with only a ring structure, and an alkyl group or alkylene group including a ring structure. For example, both a cyclohexyl group and a methyl cyclohexyl group correspond to a cyclic alkyl group.

The term alkenyl group or alkenylene group as used in the present application may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkenyl group or alkenylene group with a ring structure is included, it corresponds to a cyclic alkenyl group or alkenylene group.

The term alkynyl group or alkynylene group as used in the present application may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkynyl group or alkynylene group with a ring structure is included, it corresponds to a cyclic alkynyl group or alkynylene group.

The alkyl group, alkylene group, alkenyl group, alkenylene group, alkynyl group and alkynylene group may also be optionally substituted with one or more substituents. In this case, the substituent may be one or more selected from the group consisting of halogen (chloro (Cl), iodine (I), bromo (Br), fluor (F)), an aryl group, a heteroaryl group, an ether group, a carbonyl group, a carboxyl group and a hydroxyl group, but is not limited thereto.

The term aryl group as used in the present application may mean an aromatic ring in which one hydrogen is removed from an aromatic hydrocarbon ring, unless otherwise described. The aryl group may be monocyclic or polycyclic.

The term heteroaryl group as used in the present application may mean a substituent including an aromatic ring containing one or more hetero atoms (e.g., N, O, S, etc.) as atoms forming a ring, unless otherwise described. The heteroaryl group may be monocyclic or polycyclic.

The term weight average molecular weight as used in the present application basically means a representative molecular weight of a polymer compound, but even if it is a compound which is not a polymer compound, it may mean its mole molecular weight.

The curable composition of the present application may be a heat dissipation composition. The term heat dissipation composition as used in the present application means a composition capable of forming a cured product having heat dissipation performance. In addition, the term heat dissipation performance as used in this application may mean a case where the cured product of the heat dissipation composition manufactured to a thickness of 4 mm exhibits a thermal conductivity of about 2.5 W/m·K or more when it is measured according to ASTM D5470 standard or ISO 22007-2 standard along the thickness direction.

In another example, the thermal conductivity may also be 2.6 W/m·K or more, 2.7 W/m K or more, 2.8 W/m K or more, 2.9 W/m K or more, or 3.0 W/m K or more or so. As the thermal conductivity has a higher value, it means higher heat conductance, so that the upper limit thereof is not particularly limited. For example, the thermal conductivity may be 20 W/m·K or less, 18 W/m·K or less, 16 W/m·K or less, 14 W/m·K or less, 12 W/m·K or less, 10 W/m·K or less, 8 W/m·K or less, 6 W/m·K or less, or 4 W/m·K or less.

The curable composition according to one example of the present application comprises a resin component and a filler.

The term resin component as used in the present application comprises not only a component generally known as a resin, but also a component that can be converted into a resin through a curing reaction or a polymerization reaction. In one example, as the resin component, an adhesive resin or a precursor capable of forming an adhesive resin may be applied. An example of such a resin component includes an acrylic resin, an epoxy resin, a urethane resin, an olefin resin, an EVA (ethylene vinyl acetate) resin or a silicone resin, and the like, or a precursor such as a polyol or an isocyanate compound, and the like, but is not limited thereto.

The term curable composition as used in the present application also comprises not only a component generally known as a resin, but also a component that can be converted into a resin through a curing reaction or a polymerization reaction. In addition, the curable composition may be an adhesive composition, that is, an adhesive by itself, or a composition capable of forming an adhesive through a reaction such as a curing reaction. Such a curable composition may be a solvent-type curable composition, a water-based curable composition, or a solventless curable composition.

In addition, the curable composition may be a one-component curable composition or a two-component curable composition.

The term one-component curable composition as used in the present application means a composition that a main part and a curing agent part can react to form a resin when a specific condition (for example, a specific temperature or UV irradiation, etc.) is satisfied in a state where they are mixed together, as known.

In addition, the term two-component curable composition as used in the present application means a composition that it is separated into a main part and a curing agent part, and two separated parts are mixed and reacted, thereby being capable of forming a resin.

The curable composition according to one example of the present application may be the main part, the curing agent part or a mixture thereof, or may refer to a state after mixing them, followed by performing the reaction.

The two-component curable composition according to one example of the present application may be a urethane composition or a two-component urethane composition. The two-component urethane composition may comprise a main part comprising a resin component including a polyol and a curing agent part comprising a resin component including an isocyanate compound.

The curable composition according to one example of the present application may comprise a resin component including a polyfunctional isocyanate compound and a difunctional isocyanate compound, and a filler.

The polyfunctional isocyanate compound may mean a compound containing three or more isocyanate groups. In another example, the polyfunctional isocyanate compound may mean a compound containing 3 to 10, 3 to 9, 3 to 8, 3 to 7, 3 to 6, 3 to 5, 3 to 4 or 3 isocyanate groups.

The difunctional isocyanate compound may mean a compound containing two isocyanate groups.

The resin component of the curable composition according to one example of the present application may have a weight average molecular weight of 400 g/mol or more, 440 g/mol or more, 480 g/mol or more, 520 g/mol or more, 560 g/mol or more, or 600 g/mol or more, and in another example, the resin component may have a weight average molecular weight of 1,000 g/mol, 960 g/mol, 920 g/mol, 880 g/mol, 840 g/mol, or 800 g/mol or less. Here, the weight average molecular weight of the resin component may be within a range formed by appropriately selecting the upper and lower limits as listed above.

In addition, the resin component of the curable composition according to one example of the present application may have a polydispersity index (PDI) of 1.2 or more, 1.25 or more, 1.3 or more, 1.35 or more, 1.4 or more, and in another example, the resin component may have a polydispersity index of 1.8 or less, 1.75 or less, 1.7 or less, 1.65 or less, or 1.6 or less. Here, the polydispersity index of the resin component may be within a range formed by appropriately selecting the upper and lower limits as listed above.

Here, the weight average molecular weight and the number average molecular weight of the resin component may be measured using GPC (gel permeation chromatography). Specifically, a resin component was put in a 20 mL vial and diluted in a THF (tetrahydrofuran) solvent to a concentration of about 20 mg/mL, and then after the standard sample for calibration and the resin component were filtered through a syringe filter, filter, pore size: 0.2 $\mu$m), the weight average molecular weight and number average molecular weight of the resin component were measured using a measuring instrument (Agilent Technologies' 1200 series). At this time, as the used column, Agilent technologies' TL Mix. of. A & B was used, and as the standard samples, MP: 364000, 91450, 17970, 4910 and 1300 were used.

The polydispersity index of the resin component can be calculated from the weight average molecular weight and the number average molecular weight measured using the gel permeation chromatography, and the polydispersity index can be defined as a value obtained by dividing the weight average molecular weight by the number average molecular weight.

The resin component of the curable composition according to one example of the present application may have a K value of 0.4 or more according to Equation 1 below. In another example, the resin component may have a K value of 0.425 or more, 0.45 or more, 0.475 or more, 0.5 or more, 0.525 or more, 0.5 or more, 0.575 or more, 0.6 or more, or 0.625 or more according to Equation 1 below, and in another example, the resin component may have a K value of 1.8 or less, 1.75 or less, 1.7 or less, 1.65 or less, 1.6 or less, 1.55 or less, or 1.5 or less according to Equation 1 below. Here, the K value of the resin component according to Equation 1 below may be within a range formed by appropriately selecting the upper and lower limits as listed above.

When the K value of the resin component according to Equation 1 below satisfies the above range, it is possible to form a curable composition having excellent blending properties when blended with a filler, and allowing the cured product to have excellent electrical insulation performance while having little viscosity change of the curable composition after blending. When the K value of the resin component according to Equation 1 below is smaller than the lower limit, the blending may be poor when blended with a filler, and the viscosity of the curable composition after blending may be rapidly increased.

[Equation 1]

$$K = \sum (N \times W)$$

In Equation 1, N is a value obtained by Equation 2 below for individual isocyanate compounds included in the resin component, and W is the content (unit: wt%) of the individual isocyanate compounds based on the total amount

of isocyanate compounds included in the resin component,

[Equation 2]

$$N = F/M$$

In Equation 2, F is the number of isocyanate groups of the individual isocyanate compound, and M is the weight average molecular weight (unit: g/mol) of the individual isocyanate compound. The weight average molecular weight may be measured using GPC (gel permeation chromatography). In addition, M may be the molar mass (unit: g/mol) of the individual isocyanate compound, if necessary.

The resin component of the curable composition according to one example of the present application may comprise the difunctional isocyanate compound in an amount of 15 parts by weight or more, 17.5 parts by weight or more, 20 parts by weight or more, 22.5 parts by weight or more, or 25 parts by weight or more relative to 100 parts by weight of the polyfunctional isocyanate compound. In another example, the resin component may comprise the difunctional isocyanate compound in an amount of 80 parts by weight or less, 76 parts by weight or less, 72 parts by weight or less, or 68 parts by weight or less relative to 100 parts by weight of the polyfunctional isocyanate compound. Here, the content of the difunctional isocyanate compound in the resin component may be within a range formed by appropriately selecting the upper and lower limits as listed above.

When the content of the difunctional isocyanate compound in the resin component satisfies the above range, it is possible to form a curable composition having excellent blending properties when blended with a filler, and allowing the cured product to have excellent electrical insulation performance while having little viscosity change of the curable composition after blending.

The resin component of the curable composition according to one example of the present application may have a room temperature viscosity of 400 cP or more, 420 cP or more, 440 cP or more, 460 cP or more, or 480 cP or more as measured at room temperature, and in another example, the resin component of the curable composition may have a room temperature viscosity of 600 cP or less, 580 cP or less, 560 cP or less, 540 cP or less, or 520 cP or less. At this time, the viscosity of the resin component may be a value measured using a viscosity measuring instrument (manufacturer: Brookfield, model name: Brookfield LV) and a spindle LV-63, and may be a value measured by setting a rotation speed to 20 rpm or 100 rpm when measuring the viscosity. Here, the room temperature viscosity of the resin component may be within a range formed by appropriately selecting the upper and lower limits as listed above.

When the viscosity of the resin component satisfies the above range, it may have excellent blending properties with the filler to ensure processability, and it has a small viscosity change even after being mixed with the filler.

The resin component of the curable composition according to one example of the present application may comprise a polyfunctional isocyanate compound having a weight average molecular weight of 600 g/mol or more, 650 g/mol or more, 700 g/mol or more, 750 g/mol or more, or 800 g/mol or more, and in another example, the resin component may comprise a polyfunctional isocyanate compound having a weight average molecular weight of 2,000 g/mol or less, 1,500 g/mol or less, 1,000 g/mol or less, or 850 g/mol. Here, the weight average molecular weight of the polyfunctional isocyanate compound may be within a range formed by appropriately selecting the upper and lower limits as listed above.

In addition, the resin component of the curable composition according to one example of the present application may comprise a polyfunctional isocyanate compound having a polydispersity index (PDI) of 0.8 or more, 0.85 or more, 0.9 or more, 0.95 or more, or 1 or more, and in another example, the resin component may comprise a polyfunctional isocyanate compound having a polydispersity index of 1.5 or less, 1.45 or less, 1.4 or less, 1.35 or less, 1.3 or less, 1.25 or less, or 1.2 or less. The polydispersity index of the polyfunctional isocyanate compound may be within a range formed by appropriately selecting the upper and lower limits as listed above.

The resin component of the curable composition according to one example of the present application may comprise a difunctional isocyanate compound having a weight average molecular weight of 100 g/mol or more, 110 g/mol or more, 120 g/mol or more, 130 g/mol or more, 140 g/mol or more, 150 g/mol or more, 160 g/mol or more, or 170 g/mol or more, and in another example, the resin component may comprise a difunctional isocyanate compound having a weight average molecular weight of 500 g/mol or less, 450 g/mol or less, 400 g/mol or less mol or less, 350 g/mol or less, 300 g/mol or less, or 250 g/mol. Here, the weight average molecular weight of the difunctional isocyanate compound may be within a range formed by appropriately selecting the upper and lower limits as listed above.

In addition, the resin component according to one example of the present application may comprise a difunctional isocyanate compound having a polydispersity index (PDI) of 0.8 or more, 0.85 or more, 0.9 or more, 0.95 or more, or 1 or more, and in another example, the resin component may comprise a difunctional isocyanate compound having a polydispersity index of 1.4 or less, 1.35 or less, 1.3 or less, 1.25 or less, 1.2 or less, 1.15 or less, or 1.1 or less. Here, the polydispersity index of the difunctional isocyanate compound may be within a range formed by appropriately selecting the upper and lower limits as listed above.

Here, the weight average molecular weight and number average molecular weight of the polyfunctional isocyanate compound and the difunctional isocyanate compound in the resin component may be measured using gel permeation chromatography (GPC) in the same manner as the measurement method of the weight average molecular weight and number average molecular weight of the resin component.

The difunctional isocyanate compound according to one example of the present application is not particularly limited as long as it contains two isocyanate groups, where a difunctional isocyanate compound mainly used in the art may be used.

As the difunctional isocyanate compound, an aromatic difunctional isocyanate compound such as tolylene diisocyanate, diphenylmethane diisocyanate, phenylene diisocyanate, polyethylenephenylene polyisocyanate, xylene diisocyanate, tetramethylxylene diisocyanate, trizine diisocyanate, naphthalene diisocyanate and triphenylmethane triisocyanate, or an aliphatic difunctional isocyanate compound such as hexamethylene diisocyanate, trimethylhexamethylene diisocyanate, lysine diisocyanate, methyl norbornane diisocyanate, ethylene diisocyanate, propylene diisocyanate or tetramethylene diisocyanate, or an alicyclic difunctional isocyanate such as transcyclohexane-1,4-diisocyanate, isoborone diisocyanate, bis(isocyanate methyl)cyclohexane diisocyanate or dicyclohexylmethane diisocyanate, and the like may be used, and in order to secure desired physical properties, it is appropriate to apply polyisocyanate other than aromatics.

The difunctional isocyanate compound according to one example of the present application may be a compound represented by the following formula 1.

[Formula 1]

$$O{=}C{=}N{-}L_1{-}N{=}C{=}O$$

In Formula 1, $L_1$ may contain a linear or branched alkylene group, a cyclic alkylene group, a cyclic alkenylene group or a cyclic alkynyl group. Specifically, $L_1$ may contain a linear or branched alkylene group with 1 to 20 carbon atoms, a cyclic alkylene group with 3 to 20 carbon atoms, a cyclic alkenylene group with 3 to 20 carbon atoms or a cyclic alkynyl group with 3 to 20 carbon atoms.

In Formula 1, $L_1$ may be represented by Formula 2 below.

[Formula 2]

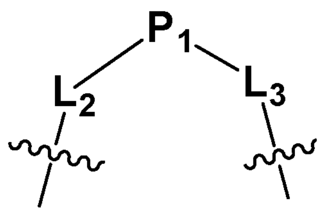

In Formula 2, $P_1$ may be a cyclic alkylene group with 3 to 20 carbon atoms substituted with one or more alkyl groups, and $L_2$ and $L_3$ may be each independently a single bond or an alkylene group with 1 to 10 carbon atoms.

Alternatively, in Formula 2, $L_2$ and $L_3$ may be each independently a single bond or an alkylene group with 1 to 8 carbon atoms, and in another example, they may be each independently a single bond or an alkylene group with 1 to 4 carbon atoms.

In addition, in Formula 1, $L_1$ may be represented by Formula 3 below.

[Formula 3]

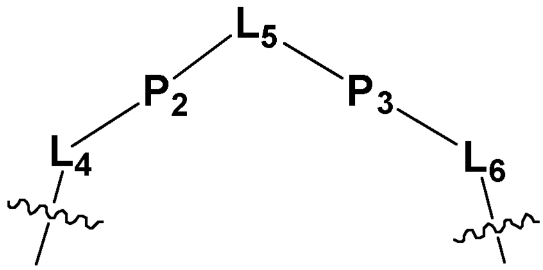

In Formula 3, $P_2$ and $P_3$ may be each independently a cyclic alkylene group with 3 to 20 carbon atoms, $L_4$ and $L_6$ may be each independently a single bond or an alkylene group with 1 to 10 carbon atoms, and $L_5$ may be an alkylene group with 1 to 10 carbon atoms.

Alternatively, in Formula 3, $L_4$ and $L_6$ may be each independently a single bond or an alkylene group with 1 to 8 carbon atoms, and in another example, they may be each independently a single bond or an alkylene group with 1 to 4 carbon atoms.

Furthermore, in Formula 3, $L_5$ may be an alkylene group with 1 to 8 carbon atoms, and in another example, it may be a single bond or an alkylene group with 1 to 4 carbon atoms.

The polyfunctional isocyanate compound according to one example of the present application is not particularly limited as long as it contains three or more isocyanate groups, and a trifunctional isocyanate compound mainly used in the art or an isocyanate compound containing more isocyanate groups may be used.

As the polyfunctional isocyanate compound, one or more selected from a multimer of the difunctional isocyanate compound and a biuret compound may be used. Specifically, as the polyfunctional isocyanate compound, an aromatic difunctional isocyanate compound such as tolylene diisocyanate, diphenylmethane diisocyanate, phenylene diisocyanate, polyethylenephenylene polyisocyanate, xylene diisocyanate, tetramethylxylene diisocyanate, trizine diisocyanate, naphthalene diisocyanate and triphenylmethane triisocyanate, or an aliphatic difunctional isocyanate compound such as hexamethylene diisocyanate, trimethylhexamethylene diisocyanate, lysine diisocyanate, methyl norbornane diisocyanate, ethylene diisocyanate, propylene diisocyanate or tetramethylene diisocyanate, or an alicyclic difunctional isocyanate such as transcyclohexane-1,4-diisocyanate, isoborone diisocyanate, bis(isocyanate methyl)cyclohexane diisocyanate or dicyclohexylmethane diisocyanate may be used, without being limited thereto.

The polyfunctional isocyanate compound according to one example of the present application may be a trifunctional isocyanate compound, and in the case of the trifunctional isocyanate compound, it may be a compound represented by the following formula 4.

[Formula 4]

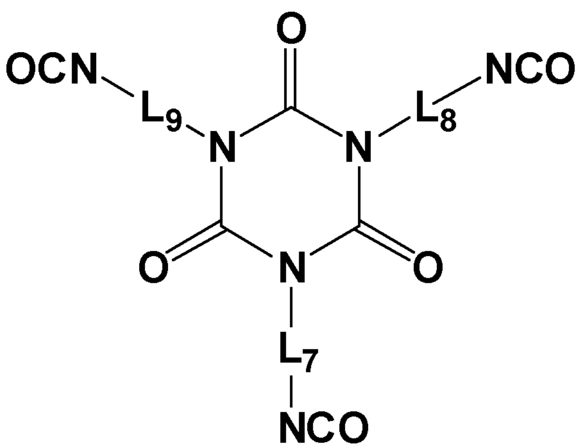

In Formula 4, $L_7$, $L_8$ and $L_9$ may be each independently an alkylene group, an alkenylene group or an alkynyl group. Specifically, $L_7$, $L_8$ and $L_9$ may be each independently be an alkylene group with 1 to 20 carbon atoms, an alkenylene group with 2 to 20 carbon atoms, or an alkynyl group with 2 to 20 carbon atoms.

The filler of the curable composition according to one example of the present application may be included, for example, for securing thixotropy and/or for securing heat dissipation (thermal conductivity) in a battery module or battery pack as needed in a process.

As described below, the curable composition may comprise an excess amount of filler. When the excessive amount of filler is used, the viscosity of the curable composition increases, whereby the processability may deteriorate upon injecting the composition into the case of the battery module. Therefore, sufficient low-viscosity properties are required so as not to interfere with processability, while comprising an excess amount of filler. In addition, if only low viscosity is simply shown, it is also difficult to secure processability, so that proper thixotropy may be required, and it may be necessary that desired appropriate adhesive force is shown during curing and the curing itself proceeds at room temperature.

Particularly, in order to form a cured product having excellent electrical insulation performance, it is advantageous to use a resin component with high reactivity due to many functional groups, but if the used amount of the resin component with high reactivity increases, there is a problem that the bending properties are lowered and the viscosity change with time increases.

The curable composition according to one example of the present application may be one in which an appropriate resin component is used to form a cured product having excellent electrical insulation performance, and simultaneously a resin component and a filler are appropriately combined and selected such that the cured product has heat dissipation performance, while securing the above-described processability and reducing the viscosity change with time.

The filler may be a thermally conductive filler, and this thermally conductive filler is a filler capable of forming a cured product having a thermal conductivity as described above.

The thermal conductivity of the thermally conductive filler itself may be, for example, about 1 W/mK or more, about 5 W/mK or more, about 10 W/mK or more, or about 15 W/mK or more. In another example, the thermal conductivity of the thermally conductive filler itself may be, for example, about 400 W/mK or less, about 350 W/mK or less, or about 300 W/mK or less.

The thermally conductive filler may include oxides such as aluminum oxide (alumina), magnesium oxide, beryllium oxide or titanium oxide; nitrides such as boron nitride, silicon nitride or aluminum nitride, carbides such as silicon carbide; hydrated metals such as aluminum hydroxide or magnesium hydroxide; metal filling materials such as copper, silver, iron, aluminum or nickel; metal alloy filling materials such as titanium; silicon powders such as quartz, glass or silica, but is not limited thereto.

In addition, if insulation properties may be secured, application of a carbon filler such as graphite may also be considered. For example, the carbon filler may utilize activated carbon. The shape or ratio of the filler included in the cured product is not particularly limited, which may be selected in consideration of the viscosity of the curable composition, the possibility of sedimentation in the cured product, desired thermal resistance or thermal conductivity, insulation, filling effects or dispersibility, and the like.

The shape of the thermally conductive filler may be appropriately selected from a spherical shape and/or a non-spherical shape (e.g., needle-shaped and plate-shaped, etc.) as needed, which is not limited thereto.

The term spherical particle as used in the present application means a particle having a sphericity of about 0.95 or more, and the non-spherical particle means a particle having a sphericity of less than 0.95.

The sphericity can be confirmed through a particle shape analysis of the particle. Specifically, the sphericity of the filler, which is a three-dimensional particle, may be defined as a ratio (S'/S) of the surface area (S') of a sphere having the same volume as that of a particle to the surface area (S) of the particle. For real particles, circularity is generally used. The circularity is expressed as a ratio of the boundary of a circle having the same image and the same area (A) as a two-dimensional image of a real particle thus obtained to the boundary (P) of the image, which is obtained by the following equation.

<Circularity Equation>

$$\text{Circularity} = 4\pi A/P^2$$

The circularity is expressed as a value from 0 to 1, where a perfect circle has a value of 1, and as a particle has an irregular shape, it has a value lower than 1. The sphericity value in the present application has been measured as an average value of circularity measured with Marvern's particle shape analysis equipment (FPIA-3000).

As the thermally conductive filler, one or two or more suitably selected may be used as needed. In addition, even if the same type of thermally conductive filler is used, those having different shapes may be mixed and used, and those having different average particle diameters may be mixed and used. For example, aluminum hydroxide, aluminum and alumina may be mixed and used as the thermally conductive filler, and their shapes and average particle diameters may be different from each other.

In addition, it is advantageous to use a spherical thermally conductive filler in consideration of the amount to be filled, but a thermally conductive filler of a form such as a needle shape or a plate shape may also be used in consideration of network formation or conductivity, and the like.

In one example, the curable composition may comprise a thermally conductive filler having an average particle diameter in a range of 0.001 μm to 100 μm. In another example, the average particle diameter of the thermally conductive filler may be 0.01 μm or more, 0.1 or more, 0.5 μm or more, 1 μm or more, 2 μm or more, 3 μm or more, 4 μm or more, 5 μm or more, or about 6 μm or more. In another example, the average particle diameter of the thermally conductive filler may be about 95 μm or less, about 90 μm or less, about 85 μm or less, about 80 μm or less, about 75 μm or less, about 70 μm or less, about 65 μm or less, about 60 μm or less, about 55 μm or less, about 50 μm or less, about 45 μm or less, about 40 μm or less, about 35 μm or less, about 30 μm or less, about 25 μm or less, about 20 μm or less, about 15 μm or less, about 10 μm or less, or about 5 μm or less.

At this time, the average particle diameter of the thermally conductive filler is a so-called D50 particle diameter (median particle diameter), which may mean a particle diameter accumulated at 50% on the basis of a volume of a particle size distribution. That is, a particle diameter at a point where the particle size distribution is obtained on the basis of the volume and the accumulated value becomes 50% in the cumulative curve with 100% of the total volume can be regarded as the average particle diameter. Such a D50 particle diameter may be measured by a laser diffraction method.

In order to obtain excellent heat dissipation performance, it may be considered that a high content of filler is used in the curable composition of the present application. In addition, in consideration of ensuring processability as well as securing excellent heat dissipation performance as described above, the content of the filler in the curable composition of the present application may be 80 wt% or more, 82.5 wt% or more, 85 wt% or more, or 87.5 wt% or more relative to the total weight of the curable composition, and in another example, the content of the filler may be 95 wt% or less, 92.5 wt% or less, or 90 wt% or less relative to the total weight of the curable composition. Here, the content of the filler may be within a range formed by appropriately selecting the upper and lower limits as listed above.

The curable composition according to the present application may further comprise the following additives.

The curable composition according to the present application may further comprise a plasticizer, if necessary. The type of the plasticizer is not particularly limited, but for example, one or more of a phthalic acid compound, a phosphoric acid compound, an adipic acid compound, a sebacic acid compound, a citric acid compound, a glycolic acid compound, a trimellitic acid compound, a polyester compound, an epoxidized soybean oil, chlorinated paraffin, a chlorinated fatty acid ester, a fatty acid compound, a compound having a saturated aliphatic chain substituted with a sulfonic acid group to which a phenyl group is bonded (e.g., LANXESS' mesamoll) and a vegetable oil may be selected and used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used.

As the phosphoric acid compound, one or more of tricresyl phosphate, trioctyl phosphate, triphenyl phosphate, octyl diphenyl phosphate, cresyl diphenyl phosphate and trichloroethyl phosphate may be used.

As the adipic acid compound, one or more of dibutoxyethoxyethyl adipate (DBEEA), dioctyl adipate, diisooctyl adipate, di-n-octyl adipate, didecyl adipate, diisodecyl adipate, n-octyl n-decyl adipate, n-heptyl adipate and n-nonyl adipate may be used.

As the sebacic acid compound, one or more of dibutyl sebacate, dioctyl sebacate, diisooctyl sebacate and butyl benzyl may be used.

As the citric acid compound, one or more of triethyl citrate, acetyl triethyl citrate, tributyl citrate, acetyl tributyl citrate and acetyl trioctyl citrate may be used.

As the glycolic acid compound, one or more of methyl phthalyl ethyl glycolate, ethyl phthalyl ethyl glycolate and butyl phthalyl ethyl glycolate may be used.

As the trimellitic acid compound, one or more of trioctyl trimellitate and tri-n-octyl n-decyl trimellitate may be used.

Also, the curable composition according to the present application may comprise a viscosity modifier, for example, a thixotropic agent, a diluent, a surface treatment agent or a coupling agent, and the like, if necessary, for controlling the viscosity, for example, increasing or decreasing the viscosity, or for controlling the viscosity according to shear force. The thixotropic agent may adjust the viscosity of the curable composition according to shear force. The usable thixotropic agent may be exemplified by fumed silica and the like. The diluent is generally used to lower the viscosity of the curable composition, and as long as it may exhibit such an action, various types of diluents known in the art may be used without limitation. The surface treatment agent is for surface treatment of the filler introduced into the cured product of the curable composition, and as long as it may exhibit such an action, various types known in the art may be used without limitation. The coupling agent may be used, for example, to improve dispersibility of the thermally conductive filler such as alumina, as long as it may exhibit such an action, various types known in the art may be used without limitation.

In addition, the curable composition according to the present application may further comprise a flame retardant or a flame retardant auxiliary agent, if necessary. The curable composition further comprising a flame retardant or a flame retardant auxiliary agent may be cured to form a flame retardant resin. As the flame retardant, various known flame retardants may be applied without particular limitation, and for example, a flame retardant in the form of a solid filler or a liquid flame retardant may be applied. The flame retardant includes, for example, an organic flame retardant such as melamine cyanurate or an inorganic flame retardant such as magnesium hydroxide, but is not limited thereto. When the amount of the thermally conductive filler included in the curable composition is large, a liquid type flame retardant material (TEP, triethyl phosphate or TCPP, tris(1,3-chloro-2-propyl)phosphate, etc.) may also be used. In addition, a silane coupling agent capable of acting as a flame retardant synergist may also be added.

Furthermore, the curable composition may comprise the constitutions as described above, and may be a solvent-type composition, a water-based composition, or a solventless composition, but considering the convenience of the manufacturing process to be described below, the solventless type may be appropriate.

When the viscosity of the curable composition satisfies the above range, processability is secured, whereby productivity can be improved.

The curable composition according to one example of the present application may have a viscosity change rate of 0.5 or more, 0.55 or more, 0.6 or more, 0.65 or more, 0.7 or more, 0.75 or more, or 0.8 or more after 12 days according to Equation 3 below, and in another example, the curable composition may have a viscosity change rate of 1.6 or less, 1.55 or less, 1.5 or less, 1.45 or less, 1.4 or less, 1.35 or less, 1.3 or less, 1.25 or less, or 1.2 or less after 12 days according to Equation 3 below. Here, the viscosity change rate of the curable composition after 12 days according to Equation 3 below may be within a range formed by appropriately selecting the upper and lower limits as listed above.

[Equation 3]

$$\text{Viscosity change rate after 12 days} = \mu_f/\mu_i$$

The $\mu_f$ is the viscosity measured after leaving the curable composition at room temperature for 12 days, and The $\mu_i$ is the viscosity of the curable composition before being left at room temperature for 12 days.

At this time, $\mu_i$ and $\mu_f$ may be room temperature viscosities measured in the same manner as in the following room temperature viscosity measurement method.

The viscosity of the curable composition may be a value measured using a viscosity measuring instrument (manufacturer: Brookfield, model name: DV3THB-CP) and a spindle CPA-52Z, and may be a value measured after it is rotated at a shear rate of 2.4/s for 180 seconds.

The two-component curable composition according to one example of the present application may comprise a main part and a curing agent part, where the main part may comprise a polyol, and the curing agent part may comprise the curable composition according to one example of the present application.

The two-component curable composition according to one example of the present application may be a urethane composition, where the two-component curable composition may be a room temperature curing type.

The polyol according to one example of the present application means a compound containing two or more hydroxyl groups, which may be exemplified by (poly)ethylene glycol, diethylene glycol, (poly)propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,9-nonanediol, 1,10-decanediol, 1,3-cyclohexanedimethanol and 1,4-cyclohexanedimethanol, (poly)ethylenetriol, diethylenetriol, (poly)propylenetriol, glycerin, 1,2,3-butanetriol, 1,2,4-butanetriol, 1,3,4-hexanetriol, 1,3,6-hexanetriol unit and trimethylolpropane, and the like, but is not particularly limited thereto.

The polyol according to one example of the present application may be exemplified by an ester-based polyol. The ester-based polyol may include a carboxylic acid-based polyol and/or a caprolactone-based polyol.

The polyol according to one example of the present application may be a polyol represented by the following formula 5 or 6.

[Formula 5]

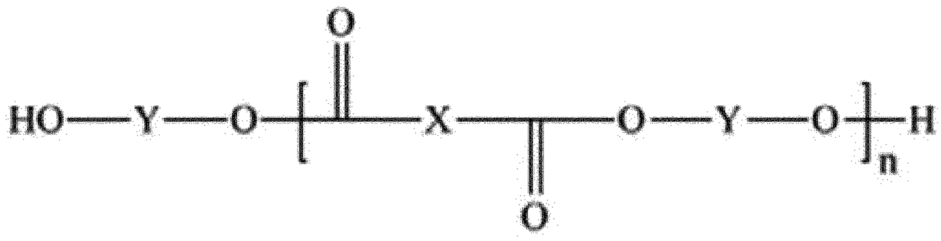

[Formula 6]

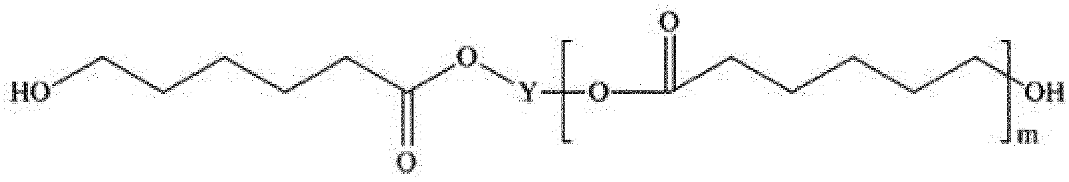

In Formulas 5 and 6, X is a dicarboxylic acid-derived unit, Y is a polyol-derived unit, for example, a triol or diol unit, and n and m are arbitrary numbers.

Here, the dicarboxylic acid-derived unit is a unit formed by urethane reaction of dicarboxylic acid with polyol, and the polyol-derived unit is a unit formed by urethane reaction of polyol with dicarboxylic acid or caprolactone.

That is, when the hydroxy group of the polyol and the carboxyl group of the dicarboxylic acid react, a water ($H_2O$) molecule is eliminated by the condensation reaction and simultaneously an ester bond is formed, where X in Formula 5 above means a portion excluding the ester bond after the dicarboxylic acid forms the ester bond by the condensation reaction, Y is also a portion excluding the ester bond after the polyol forms the ester bond by the condensation reaction, and the ester bond is shown in Formula 5.

In addition, Y in Formula 6 also represents a portion excluding the ester bond after the polyol forms the ester bond with caprolactone.

Meanwhile, when the polyol-derived unit of Y is a unit derived from a polyol containing three or more hydroxy groups such as a triol unit, a branched structure may be implemented in the Y portion of the formula structure.

The type of the dicarboxylic acid-derived unit of X in Formula 5 is not particularly limited, but in order to secure desired physical properties, it may be one unit selected from the group consisting of a phthalic acid unit, an isophthalic acid unit, a terephthalic acid unit, a trimellitic acid unit, a tetrahydrophthalic acid unit, a hexahydrophthalic acid unit, a tetrachlorophthalic acid unit, an oxalic acid unit, an adipic acid unit, an azelaic acid unit, a sebacic acid unit, a succinic acid unit, a malic acid unit, a glutaric acid unit, a malonic acid unit, a pimelic acid unit, a suberic acid unit, a 2,2-dimethylsuccinic acid unit, a 3,3-dimethylglutaric acid unit, a 2,2-dimethylglutaric acid unit, a maleic acid unit, a fumaric acid unit, an itaconic acid unit and a fatty acid unit.

The type of the polyol-derived unit of Y in Formulas 5 and 6 is not particularly limited, but it may be any one or two or more selected from the group consisting of an ethylene glycol unit, a propylene glycol unit, a 1,2-butylene glycol unit, a 2,3-butylene glycol unit, a 1,3-propanediol unit, a 1,3-butanediol unit, a 1,4-butanediol unit, a 1,6-hexanediol unit, a neopentyl glycol unit, a 1,2-ethylhexyldiol unit, a 1,5-pentanediol unit, a 1,10-decanediol unit, a 1,3-cyclohexanedimethanol unit, a 1,4-cyclohexanedimethanol unit, a glycerin unit and a trimethylolpropane unit.

In Formula 5, n is an arbitrary number, where the range may be selected in consideration of desired physical properties, and may be, for example, about 2 to 10 or 2 to 5.

In Formula 6, m is an arbitrary number, where the range may be selected in consideration of desired physical properties, and may be, for example, about 1 to 10 or 1 to 5.

The polyol according to one example of the present application may be a polyol represented by Formula 7 below.

[Formula 7]

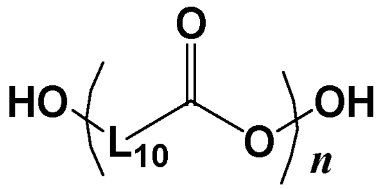

In Formula 7, $L_{10}$ may be a linear or branched alkylene group with 1 to 20 carbon atoms, a linear or branched alkenylene group with 2 to 20 carbon atoms, or a linear or branched alkynylene group with 2 to 20 carbon atoms.

The linear or branched alkylene groups of $L_{10}$ above may each independently have 1 or more or 2 or more carbon atoms, and may have 10 or less, 8 or less, 6 or less, or 4 or less carbon atoms. In addition, the linear or branched alkenylene groups or linear or branched alkynylene groups of $L_{10}$ above may each independently have 2 or more or 3 or more carbon atoms, and may have 10 or less, 8 or less, 6 or less, or 4 or less carbon atoms.

Also, in Formula 7, n may be a number of 1 or more, 3 or more, 5 or more, or 7 or more, and in another example, n may be a number of 20 or less, 16 or less, 12 or less, or 8 or less.

The main part of the two-component curable composition according to one example of the present application may comprise a filler as needed in the process.

In order to obtain excellent heat dissipation performance, it may be considered that a high content of filler is used in the main part of the present application. The content of the filler in the main part of the present application may be 80 wt% or more, 82.5 wt% or more, 85 wt% or more, or 87.5 wt% or more relative to the total weight of the main part, and in another example, the content of the filler may be 95 wt% or less, 92.5 wt% or less, or 90 wt% or less relative to the total weight of the main part. Here, the content of the filler may be within a range formed by appropriately selecting the upper and lower limits as listed above.

Here, the filler is equal to the contents of the filler included in the curable composition according to one example of the present application, and the detailed contents will be omitted.

The main part according to the present application may further comprise an additive, and the additive is equal to the contents of the additive included in the curable composition according to one example of the present application, and the detailed contents will be omitted. In addition, the additives may be further included in a state where the main part with or without additives and the curing agent part with or without additives are mixed.

In the two-component curable composition according to one example of the present application, the main part may be included in an amount of 50 parts by weight or more, 60 parts by weight or more, 70 parts by weight or more, 80 parts by weight or more, or 90 parts by weight or more relative to 100 parts by weight of the curing agent part, and in another example, the main part may be included in an amount of 200 parts by weight or less, 180 parts by weight or less, 160 parts by weight or less, 140 parts by weight or less, or 120 parts by weight or less relative to 100 parts by weight of the curing agent part. Here, the content of the main part in the two-component curable composition may be within a range formed by appropriately selecting the upper and lower limits as listed above.

In addition, at least one of the main part and the curing agent part in the two-component curable composition according to one example of the present application comprises a filler, where the total amount of the filler included in the two-component curable composition may be 80 wt% or more, 82.5 wt% or more, 85 wt% or more, or 87.5 wt% or more relative to the total weight of the two-component curable composition, and in another example, the total content of the filler may be 95 wt% or less, 92.5 wt% or less, or 90 wt% or less relative to the total weight of the two-component curable composition. Here, the content of the filler may be within a range formed by appropriately selecting the upper and lower limits as listed above.

The two-component curable composition may be cured according to the above method to form a cured product, and may have at least one or more of the following physical properties. Each of the physical properties described below is independent, where any one physical property does not take precedence over the other properties, and the cured product of the two-component curable composition may satisfy at least one or two or more of the physical properties described below. The cured product of the two-component curable composition that satisfies at least one or two or more of the physical properties described below is caused by a combination of the respective components.

The two-component curable composition may have a thermal conductivity of about 2.5 W/m·K or more when measured, in a state of being produced as a sample (cured product) with a thickness of 4 mm, according to ASTM D5470 standard or ISO 22007-2 standard along the thickness direction of the sample. In another example, the thermal conductivity may also be 2.6 W/m·K or more, 2.7 W/m·K or more, 2.8 W/m·K or more, 2.9 W/m·K or more, or 3.0 W/m·K or more or so. as the thermal conductivity has a higher value, it means higher thermal conductance, so that the upper limit thereof is not particularly limited. For example, the thermal conductivity may be 20 W/m·K or less, 18 W/m·K or less, 16

W/m·K or less, 14 W/m·K or less, 12 W/m·K or less, 10 W/m·K or less, 8 W/m·K or less, 6 W/m·K or less, or 4 W/m·K or less.

The cured product of the two-component curable composition may have a thermal resistance of about 5 K/W or less, about 4.5 K/W or less, about 4 K/W or less, about 3.5 K/W or less, about 3 K/W or less, or about 2.8 K/W or less. When it is adjusted so that the heat resistance in this range can appear, excellent cooling efficiency or heat dissipation efficiency can be secured. The heat resistance may be a numerical value measured according to ASTM D5470 standard or ISO 22007-2 standard, and the measuring method is not particularly limited.

The cured product of the two-component curable composition may have appropriate adhesive force to any substrate or module case with which the cured product of the two-component curable composition is in contact. If appropriate adhesive force can be secured, various materials, for example, cases or battery cells included in the battery module, and the like are prevented from peeling due to volume changes during charging and discharging, changes in the use temperature of the battery module or curing shrinkage, and the like, whereby excellent durability can be ensured. In addition, re-workability capable of enabling the module to be detached and reattached during the assembly process of the battery pack may be secured.

The cured product of the two-component curable composition may secure durability in order to be applied to products requiring a long warranty period such as automobiles (in the case of automobiles, about 15 years or more). The durability may mean that after a thermal shock test in which one cycle is set to a process of maintaining the temperature at a low temperature of about -40°C for 30 minutes and then raising the temperature to 80°C and maintaining it for 30 minutes, and the cycle is repeated 100 times, separating or peeling, or cracks do not occur from the module case or battery cells of the battery module.

The cured product of the two-component curable composition may have electrical insulation of 10 kV/mm or more, 15 kV/mm or more, or 20 kV/mm or more. As a dielectric breakdown voltage has a higher value, the cured product of the two-component curable composition shows excellent insulation, where it may be about 50 kV/mm or less, 45 kV/mm or less, 40 kV/mm or less, 35 kV/mm or less, or 30 kV/mm or less, but is not particularly limited. In order to achieve such a dielectric breakdown voltage, an insulating filler may be applied to the two-component curable composition. In general, among thermally conductive fillers, a ceramic filler is known as a component capable of securing insulation. The electrical insulation may be measured with a dielectric breakdown voltage measured according to ASTM D149 standard. In addition, if the cured product of the two-component curable composition can secure the electrical insulation as above, stability can be secured while maintaining performance with respect to various materials, for example, a case or battery cell included in a battery module, and the like.

The cured product of the two-component curable composition may have a volume resistance of $1\times10^{10}$ $\Omega$·cm or more, $3\times10^{10}$ $\Omega$·cm or more, $7\times10^{10}$ $\Omega$·cm or more, or $9\times10^{10}$ $\Omega$·cm or more, and in another example, the cured product of the two-component curable composition may have a volume resistance of $1\times10^{14}$ $\Omega$·cm or less, $7.5\times10^{13}$ $\Omega$·cm or less, $5\times10^{13}$ $\Omega$·cm or less, $2.5\times10^{13}$ $\Omega$·cm or less, or $1\times10^{13}$ $\Omega$·cm or less. Here, the volume resistance of the cured product of the two-component curable composition may be within a range formed by appropriately selecting the upper and lower limits as listed above. The volume resistance may be measured by a volume resistance measuring device using a cured product of a two-component curable composition having a thickness of 0.2 cm according to ASTM D257 standard. If the cured product of the two-component curable composition can secure the volume resistance as described above, excellent electrical insulation performance can be ensured, so that as it is used in various materials, for example, a case or battery cells included in a battery module, it is possible to maintain performance, while ensuring stability.

The cured product of the two-component curable composition may have a specific gravity of 5 or less. In another example, the specific gravity may be 4.5 or less, 4 or less, 3.5 or less, or 3 or less. As the specific gravity of the cured product of the two-component curable composition has a lower value, it is more advantageous for weight saving of the applied product, so that the lower limit thereof is not particularly limited. For example, the specific gravity may be about 1.5 or more, or 2 or more. In order for the cured product of the two-component curable composition to exhibit such a specific gravity, for example, a method of applying a filler that the desired thermal conductivity can be secured even at a low specific gravity when the thermal conductive filler is added, that is, a filler having a low specific gravity by itself, or applying a surface-treated filler, or the like may be used.

It is appropriate that the cured product of the two-component curable composition does not include a volatile material if possible. For example, in the cured product of the two-component curable composition, the ratio of nonvolatile components may be 90 wt% or more, 95 wt% or more, or 98 wt% or more. Here, the ratio with the nonvolatile component can be defined in the following manner. That is, with regard to the nonvolatile content, a portion remaining after the cured product of the two-component curable composition is maintained at 100°C for 1 hour or so can be defined as the nonvolatile content, and thus the ratio can be measured based on the ratio after maintaining it at 100°C for 1 hour or so with the initial weight of the cured product of the two-component curable composition.

The cured product of the two-component curable composition may have an excellent resistance to deterioration, if necessary, where stability that does not react chemically, if possible, may be required.

It may be advantageous for the cured product of the two-component curable composition to have a low shrinkage

ratio during or after curing. Through this, it is possible to prevent occurrence of peeling or voids, and the like that may occur in the process of manufacturing or using various materials, for example, a case or battery cell included in a battery module, and the like. The shrinkage ratio may be appropriately adjusted within a range capable of exhibiting the above-described effects, which may be, for example, less than 5%, less than 3%, or less than about 1%. Since the shrinkage ratio is more advantageous as the numerical value is lower, the lower limit thereof is not particularly limited.

The cured product of the two-component curable composition may also advantageously have a low coefficient of thermal expansion (CTE). Through this, it is possible to prevent occurrence of peeling or voids, and the like that may occur in the process of manufacturing or using various materials, for example, a case or battery cell included in a battery module, and the like. The coefficient of thermal expansion may be appropriately adjusted within a range capable of exhibiting the above-described effects, which may be, for example, less than 300 ppm/K, less than 250 ppm/K, less than 200 ppm/K, less than 150 ppm/K, or less than 100 ppm/K. Since the coefficient of thermal expansion is more advantageous as the numerical value is lower, the lower limit thereof is not particularly limited.

In the cured product of the two-component curable composition, tensile strength may be appropriately adjusted, and through this, an excellent impact resistance and the like may be secured. The tensile strength may be adjusted, for example, in the range of about 1.0 MPa or more.

In the cured product of the two-component curable composition, a 5% weight loss temperature in thermogravimetric analyses (TGA) may also be 400°C or higher, or the remaining amount at 800°C may be 70 wt% or more. Due to these characteristics, stability at high temperature may be further improved with respect to various materials, for example, a case or battery cell included in a battery module, and the like. In another example, the remaining amount at 800°C may be about 75 wt% or more, about 80 wt% or more, about 85 wt% or more, or about 90 wt% or more. In another example, the remaining amount at 800°C may be about 99 wt% or less. The thermogravimetric analysis (TGA) may be measured within a range of 25°C to 800°C at a temperature increase rate of 20°C/min under a nitrogen ($N_2$) atmosphere of 60 $cm^3$/min. The thermogravimetric analysis (TGA) results can also be achieved by adjusting the composition of the cured product of the two-component curable composition. For example, the remaining amount at 800°C depends on the type or ratio of the thermally conductive filler contained in the cured product of the two-component curable composition, and when an excessive amount of the thermally conductive filler is included, the remaining amount increases. However, when the polymer and/or monomer used in the two-component curable composition has generally high heat resistance compared to other polymers and/or monomers, the remaining amount more increases, and the polymer and/or monomer component included in the cured product of the two-component curable composition also affects the hardness as such.

The two-component curable composition of the present application as well as the curable composition according to one example of the present application may be formed by mixing the respective components as listed above. In addition, the mixing order of the two-component curable composition of the present application and the curable composition according to one example of the present application is not particularly limited as long as all necessary components may be included.

The two-component curable composition using the curable composition of the present application is used in various electric and electronic products such as a clothes iron, a washing machine, a dryer, a clothes manager, an electric shaver, a microwave oven, an electric oven, an electric rice cooker, a refrigerator, a dishwasher, an air conditioner, a fan, a humidifier, an air purifier, a mobile phone, a radiotelegraph, a television, a radio, a computer and a laptop, or batteries such as a secondary battery, whereby it can dissipate the generated heat. In particular, in a battery for an electric car manufactured by gathering battery cells to form one battery module and combining several battery modules to form one battery pack, the curable composition according to one example of the present application may be used as a material for connecting the battery modules. When the curable composition according to one example of the present application is used as a material for connecting the battery modules, it may serve to dissipate heat generated in the battery cell and fix the battery cells from external shock and vibration.

The cured product of the two-component curable composition of the present application may transfer heat generated from the exothermic element to the cooling region. That is, the cured product of the two-component curable composition may radiate heat generated from the exothermic element.

The cured product of the two-component curable composition may be positioned between the exothermic element and the cooling region to thermally contact them. The thermal contact means that the cured product of the two-component curable composition is in physically direct contact with the exothermic element and the cooling region to radiate heat generated from the exothermic element to the cooling region, or even if the cured product of the two-component curable composition is not in direct contact with the exothermic element and the cooling region (that is, there is a separate layer between the cured product of the two-component curable composition and the exothermic element and/or the cooling region), it dissipates heat generated from the exothermic element to the cooling region.

[Effects of Invention]

The present application can provide a curable composition capable of securing processability due to excellent

blending properties with a filler while having little viscosity change with time.

The present application can provide a curable composition for forming a cured product having excellent electrical insulation performance.

The present application can provide a device comprising, between an exothermic element and a cooling region, a cured product of a curable composition in thermal contact with both.

[Mode for Invention]

Hereinafter, the present invention will be described through Examples and Comparative Examples, but the scope of the present invention is not limited by the contents presented below.

**Used materials**

**(1) Isocyanate compound**

As a polyfunctional isocyanate compound, a trifunctional isocyanate compound, hexamethylene diisocyanate trimer (weight average molecular weight measured by GPC: 827 g/mol, PDI: 1.167) was used.

In addition, as a difunctional isocyanate compound, hexamethylene diisocyanate (weight average molecular weight measured by GPC: 174 g/mol, PDI: 1.018), isophorone diisocyanate (weight average molecular weight measured by GPC: 232 g/mol, PDI: 1.041) or dicyclohexylmethane diisocyanate (weight average molecular weight measured by GPC: 233 g/mol, PDI: 1.036) was used.

**(2) Polyol and Preparation Example of main part**

A main part included in a two-component curable composition according to one example of the present application comprises a polyol, and if necessary, may further comprise a filler and/or an additive.

As the polyol included in the main part, a caprolactone-based polyol having a weight average molecular weight of 860 g/mol was used.

The main part (P) included in the two-component curable composition was prepared by adding the polyol (P1), the filler (P2) and the additive (P3) in a weight ratio of 5:50: 1.155 (P1: P2: P3), and stirring the added materials at 600 rpm in the revolution direction and 500 rpm in the rotation direction by a paste mixer.

The filler (P2) included spherical alumina (aluminum oxide) having an average particle diameter of about 80 μm and the like, and as the other additives (P3), a plasticizer and a flame retardant, and the like were used.

**Example 1**

Hexamethylene diisocyanate trimer (R11) and hexamethylene diisocyanate (R12) were mixed in a weight ratio of 6:4 (R11: R12) to prepare an isocyanate mixture (R1) as a resin component.

The isocyanate mixture (R1), the filler (R2) and the other additives (R3) were added in a weight ratio of 5:50:2 (R1: R2: R3), and the added materials were uniformly mixed with a paste mixer, whereby a curable composition (R) according to the present application was prepared.

Here, the filler (R2) included spherical alumina (aluminum oxide) having an average particle diameter of about 80 μm, and as the other additives (R3), a plasticizer and a flame retardant, and the like were used.

In addition, a two-component curable composition (U) was prepared by mixing the curable composition (R) and the main part (P) according to Preparation Example of the main part in a weight ratio of 1: 1 (R: P).

**Example 2**

A curable composition (R) and a two-component curable composition (U) were prepared in the same manner as in Example 1 above, except that hexamethylene diisocyanate trimer (R11) and hexamethylene diisocyanate (R12) were mixed in a weight ratio of 7:3 (R11: R12) to prepare an isocyanate mixture (R1) as a resin component.

**Example 3**

A curable composition (R) and a two-component curable composition (U) were prepared in the same manner as in Example 1 above, except that hexamethylene diisocyanate trimer (R11) and hexamethylene diisocyanate (R12) were mixed in a weight ratio of 8:2 (R11: R12) to prepare an isocyanate mixture (R1) as a resin component.

**Example 4**

A curable composition (R) and a two-component curable composition (U) were prepared in the same manner as in Example 1 above, except that hexamethylene diisocyanate trimer (R11) and isophorone diisocyanate (R13) were mixed in a weight ratio of 6:4 (R11: R13) to prepare an isocyanate mixture (R1) as a resin component.

**Example 5**

A curable composition (R) and a two-component curable composition (U) were prepared in the same manner as in Example 1 above, except that hexamethylene diisocyanate trimer (R11) and isophorone diisocyanate (R13) were mixed in a weight ratio of 7:3 (R11: R13) to prepare an isocyanate mixture (R1) as a resin component.

**Example 6**

A curable composition (R) and a two-component curable composition (U) were prepared in the same manner as in Example 1 above, except that hexamethylene diisocyanate trimer (R11) and isophorone diisocyanate (R13) were mixed in a weight ratio of 8:2 (R11: R13) to prepare an isocyanate mixture (R1) as a resin component.

**Example 7**

A curable composition (R) and a two-component curable composition (U) were prepared in the same manner as in Example 1 above, except that hexamethylene diisocyanate trimer (R11) and dicyclohexylmethane diisocyanate (R14) were mixed in a weight ratio of 6:4 (R11: R14) to prepare an isocyanate mixture (R1) as a resin component.

**Example 8**

A curable composition (R) and a two-component curable composition (U) were prepared in the same manner as in Example 1 above, except that hexamethylene diisocyanate trimer (R11) and dicyclohexylmethane diisocyanate (R14) were mixed in a weight ratio of 7:3 (R11: R14) to prepare an isocyanate mixture (R1) as a resin component.

**Example 9**

A curable composition (R) and a two-component curable composition (U) were prepared in the same manner as in Example 1 above, except that hexamethylene diisocyanate trimer (R11) and dicyclohexylmethane diisocyanate (R14) were mixed in a weight ratio of 8:2 (R11: R14) to prepare an isocyanate mixture (R1) as a resin component.

**Comparative Example 1**

A two-component curable composition (U) was prepared in the same manner as in Example 1 above, except that hexamethylene diisocyanate trimer (R11), the filler (R2) and the other additives (R3) were added in a weight ratio of 5:50:2 (R1: R2: R3), and the added materials were uniformly mixed by a paste mixer, whereby a curable composition (R) according to the present application was prepared.

**<Method of measuring physical properties>**

**(1) Method for measuring volume resistance of cured product of two-component curable composition**

The volume resistance of the cured product of the two-component curable composition (U) was measured according to ASTM D257 measurement standard.
The two-component curable composition (U) was left at room temperature and normal humidity (about 30 to 70 RH%) for 24 hours to produce a cured product of a disk-type two-component curable composition cut to a diameter of 10 cm and a thickness of about 0.2 cm.
The applied voltage of 500 V, the measurement time of 1 minute and the thickness of the cured product of the two-component curable composition were input into a volume resistance measuring device (HIRESTA-US_MCP-HT800, supplier: MITSUBISHI CHEMICAL), and the volume resistance of the cured product of the two-component curable composition was measured.

**(2) Method for evaluating blending property of curable composition**

The blending property of the curable composition (R) was visually distinguished according to the following criteria under room temperature and normal humidity conditions.

The blending property of the two-component curable composition (U) directly affects the blending property of the curable composition (R). That is, when the blending property of the curable composition (R) is poor, the blending property of the two-component curable composition (U) tends to be poor, and when the blending property of the curable composition (R) is excellent, the blending property of the two-component curable composition (U) tends to be excellent.

Therefore, the blending property of the two-component curable composition (U) can be predicted by evaluation of the blending property of the curable composition (R) as follows.

OO: In the case that the curable composition immediately after blending is uniformly mixed

O: In the case that the curable composition immediately after blending tends to be uniformly mixed, but the fluidity is slightly lower than OO above

Δ: In the case that the filler is agglomerated in the curable composition immediately after blending and the composition is not mixed uniformly, but it is mixed uniformly after additionally adding a dispersant

×: In the case that the filler settles in the curable composition immediately after blending, or in the case that the filler is agglomerated in the curable composition immediately after blending, and the composition is not mixed uniformly and is mixed uniformly after additionally adding a dispersant, but the fluidity is slight lower than Δ above

**(3) Method for measuring viscosity change rate of curable composition after 12 days**

The viscosity change rate of the curable composition (R) after 12 days was measured according to Equation 3 below. Here, 1 day means 24 hours, and the viscosity after 12 days means the viscosity after 288 hours.

[Equation 3]

$$\text{Viscosity change rate after 12 days} = \mu_f/\mu_i$$

The $\mu_f$ is the viscosity measured after leaving the curable composition at room temperature for 12 days, and

The $\mu_i$ is the viscosity (initial room temperature viscosity) of the curable composition before being left at room temperature for 12 days.

At this time, $\mu_i$ and $\mu_f$ are the respective values measured using a viscosity measuring instrument (manufacturer: Brookfield, model name: DV3THB-CP) and a spindle CPA-52Z after it is rotated at a shear rate of 2.4/s for 180 seconds.

**(4) Method for measuring viscosity of resin component**

The viscosity of the resin component was measured using a viscosity measuring instrument (manufacturer: Brookfield, model name: Brookfield LV) and a spindle LV-63. After performing zero adjustment of the viscometer, the spindle LV-63 was mounted on the spindle connection part of the viscometer.

A plate was mounted on the plate connection part of the viscometer and adjusted to create a constant space (gap) between the spindle and the plate through an adjustment lever. The plate was separated, and 0.5 mL or so of the resin component was applied to the center of the separated plate. The plate coated with the resin component was mounted again on the plate connection part of the viscometer, and the measurement was performed after waiting until the torque value became zero.

The viscosity value measured at a rotation speed of 20 rpm or 100 rpm was used as the viscosity of the resin component.

**(5) Method for measuring number average molecular weight and weight average molecular weight of resin component**

The number average molecular weight ($M_n$) and the weight average molecular weight ($M_w$) of the resin component (R1) were measured using GPC (gel permeation chromatography). The resin component as an analyte is put in a 20 mL vial, and diluted in a THF (tetrahydrofuran) solvent to a concentration of about 20 mg/mL. Thereafter, the

standard sample for calibration and the sample to be analyzed were filtered through a syringe filter (pore size: 0.2 μm) and then measured. As the analysis program, Agilent technologies' ChemStation was used, and the number average molecular weight ($M_n$) and the weight average molecular weight ($M_w$) were obtained by comparing the elution times of the samples with the calibration curve. Here, as the polydispersity index (PDI), the value obtained by dividing the weight average molecular weight ($M_w$) by the number average molecular weight ($M_n$) was used.

<GPC measurement conditions>

Instrument: Agilent technologies' 1200 series

Column: using Agilent technologies' TL Mix. A&B

Solvent: THF

Column temperature: 40°C

Sample concentration: 20 mg/mL, 10 μl injection

Using MP: 364000, 91450, 17970, 4910, 1300 as standard sample

**(6) Method for measuring thermal conductivity of cured product of two-component curable composition**

The thermal conductivity was measured using a hot disk method. Specifically, in a state where each of the final two-component curable compositions prepared in Examples and Comparative Example above was cured into a disk-type sample having a diameter of 2 cm and a thickness of 4 mm, the thermal conductivity was measured with a thermal constant analyzer according to ISO 22007-2 standard along the thickness direction of the sample.

**<Measurement results of physical properties>**

Physical properties were measured for Examples and Comparative Example above, and the results are as shown in Table 1 below.

[Table 1]

| Classification | Curable composition | | Cured product | |
|---|---|---|---|---|
| | Blending property | Viscosity change rate (12 days) | Volume resistance ($\times 10^{11}$ Ω·cm | Thermal conductivity (W/mK) |
| Example 1 | OO | 0.65 | 1.05 | 3.217 |
| Example 2 | OO | 0.58 | 1.52 | 3.237 |
| Example 3 | O | 0.59 | 3.31 | 3.009 |
| Example 4 | OO | 0.84 | 8.93 | 3.189 |
| Example 5 | O | 1.02 | 9.29 | 3.060 |
| Example 6 | Δ | 1.39 | 13.6 | 3.088 |
| Example 7 | OO | 1.04 | 11.6 | 3.322 |
| Example 8 | O | 1.26 | 11.5 | 3.222 |
| Example 9 | Δ | 1.21 | 10.4 | 3.157 |
| Comparative Example 1 | × | 1.63 | 13.4 | 3.189 |

Referring to Table 1, Examples 1 to 9 had good blending properties and little viscosity change with time. In addition, it can be seen that the cured products according to Examples 1 to 9 also have excellent electrical insulation

performance and thermal conductivity.

On the other hand, in Comparative Example 1, the cured product had excellent electrical insulation performance, but had poor blending properties, and the viscosity change with time was large.

## Claims

1. A curable composition comprising:

   a resin component including a polyfunctional isocyanate compound and a difunctional isocyanate compound; and
   a filler.

2. The curable composition according to claim 1, wherein the resin component has a weight average molecular weight in a range of 400 to 1,000 g/mol.

3. The curable composition according to claim 1, wherein the resin component has a polydispersity index (PDI) in a range of 1.2 to 1.8.

4. The curable composition according to claim 1, wherein the polyfunctional isocyanate compound has a weight average molecular weight of 600 to 2,000 g/mol and a polydispersity index (PDI) in a range of 0.8 to 1.5.

5. The curable composition according to claim 1, wherein the difunctional isocyanate compound has a weight average molecular weight of 100 to 500 g/mol and a polydispersity index (PDI) in a range of 0.8 to 1.4.

6. The curable composition according to claim 1, wherein the resin component has a K value of 0.4 or more according to Equation 1 below:

   [Equation 1]

   $$K = \sum (N \times W)$$

   wherein, N is a value obtained by Equation 2 below for individual isocyanate compounds included in the resin component, and W is the content (wt%) of the individual isocyanate compounds based on the total amount of isocyanate compounds included in the resin component,

   [Equation 2]

   $$N = F/M$$

   wherein, F is the number of isocyanate groups of the individual isocyanate compound, and M is the weight average molecular weight (g/mol) of the individual isocyanate compound.

7. The curable composition according to claim 1, wherein the resin component has a room temperature viscosity in a range of 400 to 600 cP.

8. The curable composition according to claim 1, wherein the resin component comprises the difunctional isocyanate compound in an amount of 15 to 80 parts by weight relative to 100 parts by weight of the polyfunctional isocyanate compound.

9. The curable composition according to claim 1, comprising the filler in an amount of 80 to 95 wt%.

10. A two-component curable composition comprising:

    a main part comprising a resin component including a polyol; and
    a curing agent part comprising the curable composition of claim 1.

**11.** The two-component curable composition according to claim 10, forming a cured product having a volume resistance in a range of $1 \times 10^{10}$ to $1 \times 10^{14}$ Ω·cm.

**12.** A device comprising:

an exothermic element; and a cooling region, and
comprising, between the exothermic element and the cooling region, a cured product of the two-component curable composition of claim 10 in thermal contact with both.

**INTERNATIONAL SEARCH REPORT**

International application No.
**PCT/KR2022/001342**

**A. CLASSIFICATION OF SUBJECT MATTER**

**C08L 75/04**(2006.01)i; **C08G 18/72**(2006.01)i; **C09D 175/04**(2006.01)i

According to International Patent Classification (IPC) or to both national classification and IPC

**B. FIELDS SEARCHED**

Minimum documentation searched (classification system followed by classification symbols)

C08L 75/04(2006.01); B32B 27/40(2006.01); C08G 18/10(2006.01); C08G 18/79(2006.01); C08K 3/013(2018.01); C09D 175/06(2006.01); C09J 175/04(2006.01); H01M 50/183(2021.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다관능성 이소시아네이트 화합물(multifunctional isocyanate compound), 이관능성 이소시아네이트 화합물(bifunctional isocyanate compound), 필러(filler), 경화성 조성물(curable composition), 중량평균분자량(weight-average molecular weight), 다분산지수(polydispersity index), 폴리올(polyol), 2액형(two liquid type), 발열성소자(heat generating element), 냉각 부위(cooling part)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0118919 A (LG CHEM, LTD.) 19 October 2020 (2020-10-19)<br>See paragraphs [0009], [0010], [0039], [0040], [0066]-[0077], [0091]-[0093], [0118]-[0136] and [0162]-[0168]. | 1-12 |
| Y | WO 2020-179610 A1 (DIC CORPORATION) 10 September 2020 (2020-09-10)<br>See paragraphs [0001], [0018], [0063]-[0067], [0099] and [0143]-[0147]; and table 1. | 1-12 |
| Y | US 2019-0270842 A1 (COVESTRO DEUTSCHLAND AG) 05 September 2019 (2019-09-05)<br>See paragraphs [0001], [0011]-[0015], [0022], [0023] and [0067]. | 2-7 |
| Y | KR 10-2020-0047476 A (LG CHEM, LTD.) 07 May 2020 (2020-05-07)<br>See paragraphs [0017], [0019], [0052]-[0057], [0085]-[0093], [0110]-[0129] and [0161]-[0169]. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 May 2022** | **11 May 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

INTERNATIONAL SEARCH REPORT

International application No.
**PCT/KR2022/001342**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2001-0042164 A (HENKEL KOMMANDITGESELLSCHAFT AUF AKTIEN) 25 May 2001 (2001-05-25)<br>See paragraphs [0001], [0014]-[0024] and [0123]-[0148]. | 1-12 |

Form PCT/ISA/210 (second sheet) (July 2019)

**INTERNATIONAL SEARCH REPORT**
**Information on patent family members**

International application No.
**PCT/KR2022/001342**

| Patent document cited in search report | | | Publication date (day/month/year) | Patent family member(s) | | | Publication date (day/month/year) |
|---|---|---|---|---|---|---|---|
| KR | 10-2020-0118919 | A | 19 October 2020 | None | | | |
| WO | 2020-179610 | A1 | 10 September 2020 | CN | 113474169 | A | 01 October 2021 |
| | | | | TW | 202039762 | A | 01 November 2020 |
| US | 2019-0270842 | A1 | 05 September 2019 | CN | 109863215 | A | 07 June 2019 |
| | | | | EP | 3532555 | A1 | 04 September 2019 |
| | | | | EP | 3532555 | B1 | 17 June 2020 |
| | | | | ES | 2814549 | T3 | 29 March 2021 |
| | | | | JP | 2020-500232 | A | 09 January 2020 |
| | | | | KR | 10-2019-0070329 | A | 20 June 2019 |
| | | | | TW | 201829517 | A | 16 August 2018 |
| | | | | US | 10752728 | B2 | 25 August 2020 |
| | | | | WO | 2018-076199 | A1 | 03 May 2018 |
| | | | | WO | 2018-077696 | A1 | 03 May 2018 |
| KR | 10-2020-0047476 | A | 07 May 2020 | KR | 10-2019-0136646 | A | 10 December 2019 |
| | | | | KR | 10-2146541 | B1 | 20 August 2020 |
| | | | | KR | 10-2248922 | B1 | 06 May 2021 |
| KR | 10-2001-0042164 | A | 25 May 2001 | AT | 274007 | T | 15 September 2004 |
| | | | | AU | 2837199 | A | 18 October 1999 |
| | | | | AU | 746131 | B2 | 18 April 2002 |
| | | | | BR | 9909041 | A | 05 December 2000 |
| | | | | CA | 2325552 | A1 | 30 September 1999 |
| | | | | CA | 2325552 | C | 01 June 2010 |
| | | | | CN | 1214056 | C | 10 August 2005 |
| | | | | CN | 1294603 | A | 09 May 2001 |
| | | | | DE | 19908562 | A1 | 07 October 1999 |
| | | | | EP | 1093482 | A1 | 25 April 2001 |
| | | | | EP | 1093482 | B1 | 18 August 2004 |
| | | | | ES | 2228015 | T3 | 01 April 2005 |
| | | | | JP | 2002-507641 | A | 12 March 2002 |
| | | | | KR | 10-0583926 | B1 | 26 May 2006 |
| | | | | MX | 225771 | B | 25 January 2005 |
| | | | | MX | PA00009157 | A | 01 April 2001 |
| | | | | PL | 205548 | B1 | 30 April 2010 |
| | | | | PL | 342890 | A1 | 16 July 2001 |
| | | | | PT | 1093482 | E | 31 January 2005 |
| | | | | RU | 2261875 | C2 | 10 October 2005 |
| | | | | TR | 200002582 | T2 | 21 November 2000 |
| | | | | US | 6884852 | B1 | 26 April 2005 |
| | | | | WO | 99-48942 | A1 | 30 September 1999 |
| | | | | WO | 99-48942 | A9 | 22 March 2001 |
| | | | | ZA | 200003512 | B | 25 April 2001 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210017008
- KR 1020220003898
- KR 1020160105354